# EUROPÄISCHE PATENTSCHRIFT

(11) **EP 2 998 145 B1**
(45) Veröffentlichungstag und Bekanntmachung des Hinweises auf die Patenterteilung: **04.09.2019**
(21) Anmeldenummer: 15002718.3
(22) Anmeldetag: 21.09.2015
(51) Int. Cl.: B60J 7/06, B60J 7/10

(54) **PLANENAUFBAU**
CANVAS COVER
SUPERSTRUCTURE BACHEE

(30) Priorität: 22.09.2014 DE 202014007554 U
(43) Veröffentlichungstag der Anmeldung: 23.03.2016
(73) Patentinhaber: European Trailer Systems GmbH, 47441 Moers (DE)
(72) Erfinder: Remmel, Roger, 42897 Remscheid (DE)
(74) Vertreter: Sparing, Rolf Klaus

(56) Entgegenhaltungen:
- DE-A1-102010 003 932
- DE-U1-202011 100 333
- FR-A- 1 469 581
- FR-A5- 2 105 765
- US-A- 3 160 436
- US-B1- 6 183 036

## Beschreibung

Die Erfindung betrifft einen Planenaufbau für ein Nutzfahrzeug nach dem Oberbegriff des Anspruchs 1.

Aus der Praxis sind verschiedene Planenaufbauten bekannt, bei denen eine Plane, insbesondere eine Seitenplane oder eine Dachplane, an ein Verdeckgestell, beispielsweise ein öffnenbares Dachverdeck oder eine öffnenbare Seitenplanenordnung, angeschlossen ist. Durch das Planenmaterial wird die Ladung gegen Wettereinflüsse geschützt, allerdings kommt es vor, dass die Last nicht ausreichend gesichert ist und gegen die Plane drückt. Bei der Kurvenfahrt können weiter dynamische Kräfte in die Plane eingeleitet werden. Um die Plane zu verstärken ist es bekannt, Gurte, die widerstandsfähiger sind als Planenmaterial, an die Plane anzuschließen, um deren Stabilität zu erhöhen. Hierbei werden in der Regel mehrere Gurte in den beiden Hauptrichtungen der Plane in einer entsprechenden Aufnahme der Plane angeordnet und dort teilweise vernäht, teilweise verschweißt; oft wird der Gurt auch direkt mit der Plane verbunden. Die Plane wird dann über Lederriemen, die an die Plane vorzugsweise an den hierin angeordneten Gurt durch Nähen angeschlossen sind, an einen Holm des Verdeckgestells angeschlossen. Nachteilig bei den bekannten Lösungen ist zum einen der große Montageaufwand, da jeder Riemen nach Art eines Gürtels um den Holm gebunden werden muss. Ferner ist der Anschluss der Riemen an die Plane aufwendig, da zur Vermeidung von Spiel jeder Riemen individuell auf den entsprechenden Holm angepasst werden muss. Weiterhin wird nun die Last, die durch Ladung in die Plane eingeleitet wird, über den Riemen in den Holm eingeleitet, wobei die Plane auch an weiteren Enden mit dem Verdeckgestell verbunden sein kann. Dies hat zur Folge, dass der Riemen übermäßig belastet wird und dazu tendiert auszureißen, wodurch die Verbindung insbesondere flexibler Holme mit der Plane verloren geht.

Aus der Praxis sind verschiedene Planenaufbauten bekannt, bei denen eine Plane, insbesondere eine Seitenplane oder eine Dachplane, an ein Verdeckgestell, beispielsweise ein öffnenbares Dachverdeck oder eine öffnenbare Seitenplanenordnung, angeschlossen ist. Selbst wenn das Verdeckgestell entlang von Längsträgern auf Rollen verlagerbare Schlitten mit Holmen aufweist, ist das Öffnen des Planenaufbaus beschwerlich, weil die Bewegung der Masse der beweglichen Teile des Verdeckgestells sowie die Plane, die gegen die Schwerkraft in Falten gelegt werden muss, insbesondere bei einseitigem Einleiten der Öffnungskraft schwer zu bewerkstelligen ist. Auch bei motorisch angetriebenen Öffnungsmechanismen besteht ein Nachteil darin, dass die zum Öffnen erforderliche Kraft deutlich höher ist als die zum Schließen erforderliche Kraft.

EP 0 379 821 A1 beschreibt einen Planenaufbau für ein Nutzfahrzeug, bei dem eine als Dachplane ausgebildete Plane aus wetterbeständigem Material auf einem Verdeckgestell abgestützt und öffenbar ist. Die Dachplane ist hierbei auf als Spriegel ausgebildeten Holmen abgestützt und an diese angeschlossen. An die verlagerbaren Spriegel ist ferner ein streifenförmiges Band aus elastischem Material dadurch angeschlossen, dass es über einen Beschlag an den Spriegel festgelegt ist, wobei der abgerundete Beschlag zum Krümmen des Bandes beiträgt. Das Band verläuft hierbei quer zu den Spriegeln, wobei im geöffneten Zustand der Plane das Band sich zumindest teilweise an den Spriegel aufgrund seiner Krümmung anschmiegt. Der Bereich des Bandes zwischen zwei benachbarten Spriegeln hebt beim Zusammenschieben der Spriegel die Plane an, indem das ausreichend steife Band sich in eine nach oben gerichtete Falte legt und die daraufliegende Plane anhebt. Hierbei ist das Band jedoch nicht mit der Plane verbunden. Das Band neigt dazu, sich in die geschlossene Stellung der Plane zurückzuverlagern, das Band ändert hierbei jedoch nicht seine Länge. Da das Band seine Länge nicht zu ändern vermag, ist es nicht expandierbar ausgebildet. Damit ist das im geschlossenen Zustand der Plane entspannte Band zudem nicht teilweise expandiert. Nachteilig ist insbesondere, dass das Stahlband so stark vorgespannt ist, dass die Dachplane sich selbständig schließt. Hierdurch wird die in Schließrichtung der Plane wirkende Gewichtskraft der Plane nicht etwa ausgeglichen, sondern noch verstärkt. Ferner verschleißt die Dachplane durch die Relativbewegung des Stahlbandes schnell.

GB 2 327 450 A beschreibt einen Planenaufbau für ein Nutzfahrzeug, bei dem ein Verdeckgestell eine als Seitenplane ausgeführte Plane aus wetterbeständigem Material trägt, wobei die Plane über als Spanngurte ausgebildete Gurte an einen Längsträger des Verdeckgestells angeschlossen ist. Die Gurte verlaufen dabei im Wesentlichen vertikal und sind an ihrem dem Längsträger gegenüberliegenden Ende mit Haken ausgestattet, wobei die Gurte eine expandierbare Zone aufweisen. Ein Spannglied ist an jedem Spanngurt über ein Verbindungsmittel angeschlossen, wobei das Spannglied quer zu der Erstreckung der Spanngurte verlagerbar ist, wodurch die Haken gegen ein im Bereich einer Ladepritsche angeordnetes Gegenstück nach oben verlagert werden, so dass die Seitenplane insgesamt gespannt ist, und die Gurte im geschlossenen Zustand der Plane ebenfalls zumindest teilweise gespannt sind. Die Gurte sind hierbei jeweils in einer Aufnahme der Plane aufgenommen, die eine Aussparung aufweist, in der das Spannglied mit den Gurten verbunden ist. Holme sind nicht an die Plane angeschlossen. Die Betätigung der Plane ist umständlich, da der Öffnungsvorgang und der Schließvorgang der Plane an sich mit einem hiervon getrennten Lösevorgang und Spannvorgang der Haken verbunden werden muss.

FR 1 469 581 A beschreibt einen Planenaufbau für ein Nutzfahrzeug, bei dem eine Plane aus wetterbeständigem Material an ein Verdeckgestell aus mehreren verlagerbaren U-förmigen Holmen angeschlossen ist, wobei mehrere jeweils quer zu den Holmen verlaufende, expandierbar ausgebildete Gurte im geschlossenen Zustand der Plane derart gespannt sind, dass sie durch Entspannen den Planenaufbau öffnen können, indem dieser entlang einer Führungsschiene verlagert wird.

FR 2 105 765 A5 beschreibt einen Planenaufbau für ein Nutzfahrzeug mit einem Verdeckgestell, an dem eine Plane über mehrere verlagerbare U-förmige Holme angeschlossen ist, wobei der Bereich zwischen benachbarten Holmen von einem Gurt überspannt wird. Die Enden des Gurtes sind jeweils an den äußersten der Holme, nicht jedoch an den dazwischenliegenden Holmen angeschlossen, wobei die Plane oberhalb des Gurtes ruht..

DE 10 2010 003 932 A1 beschreibt einen Planenaufbau für ein als Kippmulde ausgebildetes Nutzfahrzeug, bei dem eine Plane aus wetterbeständigem Material an einem Verdeckgestell angeschlossen ist, wobei das Verdeckgestell mehrere verlagerbare, U-förmige Holme umfasst, an denen die Plane angeschlossen ist. Hierbei sind zwei benachbarte Holme durch ein Betätigungselement miteinander verbunden, wobei das Betätigungselement eine Zugfeder sowie zwei Seil- oder Stangenabschnitte umfasst. Das Betätigungselement ist im geschlossenen Zustand des Verdeckgestells gespannt und spannt daher die Holme in Öffnungsrichtung.

US 6 183 036 B1 beschreibt einen Planenaufbau für ein Nutzfahrzeug, bei dem eine Plane aus wetterbeständigem Material jeweils endseitig mit einem U-förmigen Holm verbunden ist, wobei die Plane und die beiden endseitigen Holme jeweils an einem zwischen Endrahmenstücken des Verdeckgestells gespannten Kabel verlagerbar angeschlossen sind. Im Bereich des Anschlusses der Plane an das Kabel weist diese eine rohrförmige Verstärkung auf, die in einer Tasche der Plane eingesetzt ist. Zum Bilden der Tasche sind Streifen an die Plane angenäht, wobei quer zu den Verstärkungen ein längs verlaufender Gurt an die Plane angenäht ist.

US 3 160 436 A beschreibt einen Planenaufbau für ein Nutzfahrzeug, bei dem eine Plane aus wetterbeständigem Material an ein Verdeckgestell angeschlossen ist, wobei die Plane an mehreren verlagerbaren Holmen des Verdeckgestells angeschlossen ist, und wobei ein Gurt, der quer zu den Holmen verläuft, an die Plane angeschlossen ist. Hierbei sind die Gurte, die benachbart zu den Seitenwänden des Planenaufbaus sind, aus einem elastischen Material wie Gummi hergestellt.

Es ist die Aufgabe der Erfindung, einen verbesserten Planenaufbau anzugeben, bei dem insbesondere die Montage der Plane an das Verdeckgestell vereinfacht ist, in die Plane eingeleitete Lasten besser auf das Verdeckgestell übertragen werden oder die Öffnungsbewegung der Plane unterstützt wird.

Diese Aufgabe wird erfindungsgemäß durch einen Planenaufbau mit den Merkmalen des unabhängigen Anspruchs 1 gelöst.

Erfindungsgemäß ist ein Planenaufbau für ein Nutzfahrzeug geschaffen, das ein Verdeckgestell, eine Plane aus wetterbeständigem Material und einen Gurt umfasst, wobei der Gurt in einer Aufnahme der Plane aufgenommen ist. Die Plane ist hierbei an zumindest einem Holm des Verdeckgestells angeschlossen, wobei der Gurt quer zu dem Holm verläuft. Hierbei ist der Gurt expandierbar ausgebildet und ist im geschlossenen Zustand der Plane zumindest teilweise gespannt. Das expandierbare Ausbilden des Gurtes kann sowohl durch einen elastischen, längenveränderbaren Gurt nach Art eines Expanders verwirklicht sein als auch durch einen Gurt, der mit einem expandierbaren Teil wie einer Feder, insbesondere einer Schraubenfeder oder dergleichen, verbunden ist. Durch das expandierbare Ausbilden des Gurtes, der im geschlossenen Zustand der Plane gespannt ist, wird eine Öffnungshilfe für den Planenaufbau geschaffen, da der expandierbare Gurt dazu tendiert, sich zusammenzuziehen und damit benachbarte Holme aufeinander zu bewegen, wodurch er im geöffneten Zustand der Plane weniger gespannt ist.

Hierbei ist vorgesehen, dass die Aufnahme einen Schlitz aufweist, durch den der entspannte und damit verkürzte Gurt in einem geöffneten Zustand der Plane austreten kann. Da die Kraftunterstützung bei einem expandierbaren Gurt im Wesentlichen durch Verkürzung des Gurtes erfolgt, kann die Kraftunterstützung wirksam werden, indem der verkürzte Gurt der Öffnungsbewegung der Plane nicht vollständig folgt und damit im Bereich des Schlitzes aus der Aufnahme herausgleitet. Hierdurch ist der entspannte Gurt gegenüber der Länge der Plane verkürzt, und reicht nicht vollständig so hoch wie die in Falten gelegte Plane.

Gemäß einem Aspekt ist vorgesehen, dass eine Schlaufe des Gurts um zumindest einen Holm des Verdecksgestells gelegt ist, und dass ein Sicherungsglied zwischen Holm und Plane als Umlenkglied für den Gurt angeordnet ist und den Holm bezüglich des Gurts reibschlüssig fixiert. Hierdurch werden auf die Plane einwirkende Lasten direkt in den Holm eingeleitet, wodurch das System Verdeckgestell/Plane stabiler wird und eine Schwachstelle, nämlich der Anschluss der Plane an den Holm über einen Riemen, entfällt. Darüber hinaus ist der Planenaufbau leicht herzustellen, da die Schlaufe des Gurts leicht von einem Holm durchsetzt werden kann, und damit durch Straffziehen des Gurtes am Ende der Plane unnötiges Spiel aus der Plane genommen wird; daher ist der Gurt zweckmäßigerweise in der Aufnahme verschiebbar aufgenommen. Das Sicherungsglied stellt sicher, dass eine reibschlüssige Führung bzw. Umlenkung des Gurts erfolgt, so dass die Schlaufe nach dem Straffziehen des Gurts den Holm umschließt und diesen straff einspannt, und weiterhin zwei bezüglich des Holms gegenüberliegende Gurtabschnitte der Schlaufe das eine - vorzugsweise zentrale - Öffnung aufweisende Sicherungsglied durchsetzen. Hierdurch kommt es zu einer spielarmen Verbindung zwischen Plane und Holm des Verdeckgestells, die überdies bei durch Alterung hinzutretender Toleranz nachjustiert werden kann. Weiter werden die Gurtabschnitte über das Sicherungsglied umgelenkt.

Bei dem Holm handelt es sich zweckmäßigerweise um einen Spriegel eines Verdeckgestells eines öffnenbaren Dachs eines Nutzfahrzeugaufbaus oder eines Containers oder um die Runge einer Seitenwand eines Nutzfahrzeugaufbaus, die vorzugsweise als Schieberunge ausgebildet ist, so dass mit der Schieberunge bzw. dem Spriegel die Plane durch Verlagerung entlang entsprechender Führungen geöffnet werden kann.

Das Sicherungsglied ist zweckmäßigerweise als kreisförmiger oder ovaler Sicherungsring ausgebildet, der beispielsweise aus Stahl, alternativ aber auch aus Kunststoff ausgebildet ist. Hierbei durchsetzt die Schlaufe des Gurts die Öffnung des Sicherungsrings, der selbst wiederum auf der der Plane zugekehrten Seite des Holms angeordnet ist. Der Sicherungsring dient zugleich als Zugentlastung und vermeidet so, dass die Aufnahme für den Gurt bei Zugbeanspruchung einreißt.

Zweckmäßigerweise ist die maximale Breite des Sicherungsrings nicht kleiner als die Breite des Gurtes, so dass der Gurt zumindest nahezu mit seiner gesamten Breite um das entsprechende Segment des Sicherungsrings geführt ist. Weiterhin ist zweckmäßigerweise vorgesehen, dass das in Richtung des Gurts verlaufende Außenmaß des Holms, bei zylindrischem Querschnitt also dessen Durchmesser beziehungsweise bei rechteckigem Querschnitt dessen Stärke in Richtung des Gurtverlaufs, nicht größer und vorzugsweise etwa entsprechend dem Innenmaß des Sicherungsrings vorgesehen ist, so dass die Schlaufe im Querschnitt im Wesentlichen U-förmig ausgebildet sein kann, was eine besonders einfach Montage ermöglicht, da der Gurt zwischen Holm und Sicherungsring keine S-Form annehmen muss. Alternativ ist es möglich, das Innenmaß des Sicherungsrings kleiner zu wählen als das Außenmaß des Holms, wodurch die Einleitung der Kräfte von dem Gurt in den Holm durch einen S-Verlauf noch verbessert wird.

Zweckmäßigerweise ist die Aufnahme in ihrer Breite quer zur Erstreckungsrichtung des Gurts an die Breite des Gurts angepasst, so dass ein seitliches Spiel des Gurts vorteilhaft vermieden ist. Hierbei weist die Aufnahme mehrere der Außenseite der Plane abgekehrte Aussparungen auf, durch die jeweils eine Schlaufe des Gurts herausführbar ist. Die Aussparung ist in Erstreckungsrichtung des Gurtes vorzugsweise etwa an das Maß - in Erstreckungsrichtung - des Sicherungsrings angepasst.

Gemäß einer besonders günstigen Ausführung ist der Holm mit einem abgerundeten, insbesondere zylindrischen Querschnitt ausgebildet. Der Querschnitt kann aber auch nur halbzylindrisch ausgebildet sein, mit flacher Oberkante (U-Form, nach oben geschlossen) oder andere polygonale Querschnitte aufweisen. Es ist möglich, dass der Holm im Bereich des Anschlusses an den Gurt eine geringfügige Einschnürung aufweist, die ein Wandern des Gurtes in der Richtung der Achse des Holms vermeidet. Weiter kann der Holm an seiner der Plane zugekehrten Seitenfläche Vertiefungen aufweisen, in denen das Sicherungsglied einpassbar ist und damit bei der Montage einen guten, vorläufigen Sitz aufweist.

Das Sicherungsglied weist vorzugsweise einen größeren Umfang oder Durchmesser auf als der zumindest eine Holm. Sowohl der Holm als auch das Sicherungsglied kann mehrteilig ausgebildet sein, so dass neben einem Montageschritt, bei dem erst die Schlaufe das Sicherungsglied durchsetzt und dann der Holm die Schlaufe durchsetzt und anschließend der Gurt straff gezogen wird, auch eine Montage möglich ist, bei der der Holm zwischen Gurt und Plane geschoben wird und anschließend das mehrteilige, insbesondere zweiteilige Sicherungsglied zwischen Holm und Plane um die Schlaufe gelegt wird, um Holm gegen Plane zu sichern. Diese Ausführung eignet sich besonders zum Nachrüsten.

Gemäß einem Aspekt ist ein Planenaufbau geschaffen, der hergestellt wird durch ein Verfahren mit den Schritten Einführen wenigstens eines Gurtes in eine Aufnahme einer Plane; Überspannen eines Holme enthaltenden Verdeckgestells mit der Plane derart, dass der wenigstens eine Gurt senkrecht zu der Erstreckung der Holme angeordnet ist; Bilden von Schlaufen des Gurts an Positionen, an denen Holme an der Plane anliegen; Einführen der Schlaufe in eine Öffnung eines Sicherungsglieds; Durchgreifen der Schlaufe unterhalb des Sicherungsglieds mit einem Holm; und Straffen des Gurtes und gegebenenfalls Verbinden zumindest eines der Enden des Gurtes mit einem festen oder beweglichen Teil des Verdeckgestells. Der durch das Verfahren hergestellte Planenaufbau ermöglicht eine rasche Verbindung der Plane mit dem Verdeckgestell und ermöglicht überdies, dass in die Plane über die Gurte eingeleitete Kräfte unmittelbar auf die Holme des Verdeckgestells eingeleitet werden, wobei das Straffen des Gurtes zusätzlich dazu führt, dass die Gurte weniger nachgiebig als die Plane sind und damit im Wesentlichen Lasten der Ladung in das Gestell einleiten. Das zwischen Holm und Plane angeordnete Sicherungsglied dient als Umlenkglied für den Gurt im Bereich der Schlaufe und stellt zugleich eine Entlastung der Aufnahme dar. Der Gurt, der gegenüber der Plane straff gezogen ist, nimmt Lasten der Ladung auf und leitet diese in das Verdeckgestell ein, ohne die Plane hierdurch zu beanspruchen, so dass der bzw. die Gurte die Plane entlasten.

Die Aufnahme für den Gurt ist zweckmäßigerweise durch ein Verfahren an die Innenseite der Plane angeschlossen, wie beispielsweise Schweißen, Kleben oder Nähen. Da die Aufnahme vorzugsweise über die gesamte Länge der Plane verläuft, kann die Aufnahme auch ein Abschnitt planen Materials sein, das innenseitig an die Plane angeschlossen, insbesondere angeschweißt ist.

Zweckmäßigerweise ist das Sicherungsglied, das beispielsweise als Ring ausgebildet ist, mit einem abgerundeten Querschnitt ausgebildet, damit keine Kanten sich in das Planenmaterial bzw. das Material der Aufnahme abdrücken beziehungsweise dieses einschneiden.

Es ist möglich, das Sicherungsglied als von Plane und Aufnahme einerseits und Holm andererseits verschiedenes Teil auszuführen, wodurch die Montage erleichtert ist. Es ist alternativ aber vorteilhaft möglich, das Sicherungsglied im Bereich der Aussparungen der Aufnahme an der Aufnahme bzw. mit der Plane fest zu verbinden, wodurch sichergestellt ist, dass das Sicherungsglied stets die richtige Lage bezüglich der Plane und des Holms einnimmt.

Ist der Gurt, wie vorstehend beschrieben, an den Holm festgelegt, insbesondere durch das vorstehend erläuterte Sicherungsglied, entsteht zwischen benachbarten Holmen, an denen der Gurt festgelegt ist, eine definiert den Zwischenbereich vorspannende Kraft, so dass der expandierbare Gurt gezielt einem bestimmten Bereich der Plane zugeordnet ist, und dementsprechend die Kraft genau auf diesen Bereich eingestellt werden kann. Damit wird vermieden, dass eine Gesamtöffnungskraft in das Verdeckgestell bzw. in den Planenaufbau eingeleitet wird, die sich impulsartig entlädt und die mit entsprechender Energie beim Schließen der Plane überwunden werden muss.

Vorteilhaft kann ein Gurt über die gesamte Länge des Planenaufbaus, quer zu den Holmen, eingesetzt werden, da durch den reibschlüssigen bzw. klemmenden Anschluss des Gurtes an den Holm die Aufstellkraft gleichmäßig über die Plane, d.h. über die mehreren sich ergebenden Zwischenbereiche, verteilt werden kann. Insbesondere wird vermieden, dass der Gurt sich auf halber Strecke unter vollständigem Aufrichten einiger Planenbereiche entspannt, während andere Planenbereiche nicht aufgestellt werden.

Es ist möglich, dass der Gurt auch im geöffneten Zustand der Plane bzw. des Teilbereichs der Plane zwischen zwei benachbarten Holmen teilweise gespannt ist. Dies hat vorteilhaft zur Folge, dass die Kraftunterstützung zum Aufstellen der Plane ausreicht, die gesamte Plane bzw. den Teilbereich der Plane zwischen den benachbarten Holmen aufzustellen, ohne dass in die an den Längsträgern geführten Holme eine besondere horizontale Kraftkomponente eingeleitet werden muss. Vorzugsweise ist aber vorgesehen, dass der expandierbare Gurt im geöffneten Zustand der Plane bzw. eines Teilbereichs der Plane zwischen unmittelbar benachbarten Holmen bereits entlastet ist, da die wesentliche aufzubringende Kraft bei flacher Plane erfolgt, während bei weitestgehend bereits aufgestellter Plane die verbleibende Kraft gering ist. Damit wird auch sichergestellt, dass die zu überwindende Kraft beim Schließen der Plane bzw. des Teilbereichs der Plane zwischen zwei unmittelbaren benachbarten Holmen, die an den Längsträger geführt sind, nicht zu groß wird. Durch die entsprechende Wahl der Vorspannung des expandierbaren Gurtes wird auch eine andere Schließfolge erreicht: Während bei konventionellen Planenaufbauten ohne Kraftunterstützung die Planenabschnitte beim Öffnen der Plane nacheinander aufgestellt werden, und zwar von dem vordersten Abschnitt (das ist der zuerst bewegte Abschnitt) bis zu dem hintersten Abschnitt, stellen sich durch die Kraftunterstützung alle Planenabschnitte in etwa gleichzeitig auf, sobald die Plane entspannt wird und der sonst zunehmende Widerstand zum Aufstellen der Planenabschnitte entfällt. Auch beim Schließen der Plane zieht sich diese langsam ziehharmonikaartig auseinander, während die expandierbaren Gurte gespannt werden, während bei bekannten Planenaufbauten sich der in Schließrichtung vordere Planenabschnitt in der Regel zuerst flach legt, und entsprechend hohe Kräfte in dem letzten Teil der Schließbewegung eingeleitet werden müssen, um den hinteren Planenabschnitt abzusenken.

Es versteht sich, dass Planenaufbauten möglich sind, bei denen nicht über die gesamte Erstreckung der Plane ein expandierbarer Gurt vorgesehen ist, sondern nur über Teilbereiche, beispielsweise die vordere Hälfte. Hierdurch wird der Umstand Rechnung getragen, dass häufig eine vollständige Öffnung der Plane nicht erforderlich ist, und unnötige Arbeit vermieden wird.

Es ist möglich, die Aufstellbewegung der Plane ferner durch Riegel, die beispielsweise an den Längsträgern, an denen die Holme geführt sind, angeordnet sind, zu stoppen oder zu bremsen. Insbesondere können die lösbaren Riegel die Plane in gewünschten Positionen arretieren. Diese Riegel sind auch dann vorteilhaft, wenn an Stelle eines expandierbaren Gurtes ein federbelasteter Knickstab (etwa ein in beide Winkelpositionen vorspannbares Knie oder Winkel) eingesetzt wird, der die Plane sowohl in Öffnungsrichtung als auch in Schließrichtung vorspannt, das heißt in Richtung auf eine mittlere Position vorgespannt ist, und damit die Öffnungsbewegung und die Schließbewegung unterstützt.

Vorzugsweise ist der Gurt so ausgelegt, dass er mindestens 30% des Öffnungsweges eines Planenabschnitts zweier unmittelbar benachbarter Holme unterstützt, vorzugsweise mindestens 50%, besonders bevorzugt mehr als 2/3.

Gemäß einer zweckmäßigen Ausgestaltung ist vorgesehen, dass der Gurt mehrere Abschnitte aufweist, von denen zumindest einige als Federmittel oder als expandierbarer Gurt ausgebildet sind. Hierdurch lässt sich besonders einfach der Verfahrweg des Planenaufbaus einstellen, da der expandierbare Gurtabschnitt an die benötigte oder gewünschte Kraftunterstützung angepasst wird. Die weiteren Gurtabschnitte können dabei vorteilhaft zugsteif ausgebildet sein, vorzugsweise derjenige Bereich, der an den Holm angeschlossen wird. Vorteil eines durchgehenden Expanders ist hingegen, dass dieser über seine gesamte Länge wirksam ist und dass damit ein besonders langer Federweg gegeben ist.

Zweckmäßigerweise ist der Schlitz in einem Bereich vorgesehen, der in etwa mittig zwischen zwei Anschlüssen des Gurtes an jeweils einem benachbarten Holm liegt, also mittig zwischen zwei unmittelbar benachbarten Holmen, wobei die Holme in der Regel über Falthilfen in Form von Gelenken miteinander verbunden sind. Es ist möglich, dass im maximal angehobenen Bereich der Gelenke ein Hubholm das Anheben der Plane unterstützt, dann ist aber darauf zu achten, dass der expandierbare Gurt unterhalb des Hubholms verläuft, damit der expandierbare Gurt sich beim Öffnen der Plane von dem Hubholm entfernen kann. Bei geöffneter Plane ist der Gurt im Bereich des Schlitzes von der Aufnahme und damit von der Plane und damit auch von einem gegebenenfalls vorgesehenen Hubholm beabstandet angeordnet.

In einer ersten bevorzugten Ausführung ist der Gurt im Bereich jedes nicht angehobenen Holms festgelegt, wobei der Gurt nur einen Bereich zwischen zwei nicht angehobenen Holmen in Öffnungsrichtung vorspannt. Hierdurch ist sichergestellt, dass jeder Bereich, der durch den expandierbaren Gurt in Öffnungsrichtung vorgespannt werden soll, auch entsprechend in Öffnungsrichtung verlagert wird. Die vorzugsweise zwischen den benachbarten Holmen vorgesehenen gelenkigen Verbindungen, die vorzugsweise auch einen die gegenüberliegenden Verbindungen im Bereich eines Gelenks miteinander verbindenden Hubholm einschließen, unterstützen die Faltbewegung der Plane beim Öffnen.

In einer zweiten bevorzugten Ausführung ist der Gurt im Bereich jedes nicht angehobenen Holms und jedes angehobenen Holms festgelegt, wobei der Gurt nur einen Bereich zwischen zwei direkt beachbarten Holmen in Öffnungsrichtung vorspannt.

In einer dritten bevorzugten Ausführung ist der Gurt im Bereich jedes angehobenen Holms festgelegt, wobei der Gurt nur einen Bereich zwischen zwei angehobenen Holmen in Öffnungsrichtung vorspannt. Hierbei kann der Gurt in einem von der Festlegung an den angehobenen Holm beanstandeten Bereich wahlweise teilweise in einer Aufnahme der Plane oder vorzugsweise unterhalb der Plane angeordnet sein.

Bei den vorstehenden Ausführungen ergibt sich jeweils, dass der Gurt zwischen benachbarten Holmen im geschlossenen Zustand der Plane etwa gleich der Länge der Verbindungen zwischen zwei Holmen ist, während der Gurt im geöffneten Zustand der Plane kürzer als die Länge der Verbindungen zwischen den zwei Holmen ist. Die gelenkigen Verbindungen können als zwei gelenkige miteinander verbundene Lenker ausgebildet sein, deren der Verbindung abgekehrte Enden jeweils an dem Holm gelenkig angeschlossen sind; alternativ kann es sich aber auch um eine Faltplatte handeln, die gelenkig beidendig an jeweils einen Holm angeschlossen ist und die sich im Mittelbereich bewegt bzw. faltet und daher auch als Gelenk bezeichnet wird.

Gemäß einem Aspekt werden ein Gurt und mehrere Ringe zum Festlegen einer Plane an ein Verdeckgestell, insbesondere ein einen Holm aufweisendes Verdeckgestell, verwendet.

Gemäß einem weiteren Aspekt wird ein expandierbarer Gurt als Öffnungshilfe für eine Plane oder einen Teilbereich einer Plane verwendet.

Weitere Eigenschaften, Merkmale, Weiterbildungen und Vorteile der Erfindung ergeben sich aus den abhängigen Ansprüchen sowie aus der nachfolgenden Beschreibung eines bevorzugten Ausführungsbeispiels.

Die Erfindung wird nunmehr unter Bezugnahme auf die anliegenden Zeichnungen an Hand eines bevorzugen Ausführungsbeispiels näher erläutert.
- Fig. 1: zeigt eine perspektivische Ansicht von unten auf einen Planenaufbau eines Containers, der nicht Teil der Erfindung ist.
- Fig. 2: zeigt einen vergrößerten Ausschnitt aus Fig. 1.
- Fig. 3: zeigt schematisch eine Seitenansicht eines Ausschnitts eines Planenaufbaus vergleichbar Fig. 1 im geschlossenen Zustand der Plane.
- Fig. 4: zeigt schematisch den Ausschnitt aus Fig. 3 im geöffneten Zustand der Plane.
- Fig. 5: zeigt schematisch eine Seitenansicht eines Ausschnitts eines Planenaufbaus vergleichbar Fig. 1 im geschlossenen Zustand der Plane.
- Fig. 6: zeigt schematisch den Ausschnitt aus Fig. 5 im geöffneten Zustand der Plane.
- Fig. 7: zeigt schematisch eine Seitenansicht eines Ausschnitts eines Planenaufbaus vergleichbar Fig. 1 im geschlossenen Zustand der Plane.
- Fig. 8: zeigt schematisch den Ausschnitt aus Fig. 7 im geöffneten Zustand der Plane.
- Fig. 9: zeigt schematisch eine Seitenansicht eines Ausschnitts eines Planenaufbaus vergleichbar Fig. 1 im geschlossenen Zustand der Plane, der nicht Teil der Erfindung ist.
- Fig. 10: zeigt schematisch den Ausschnitt aus Fig. 9 im geöffneten Zustand der Plane.

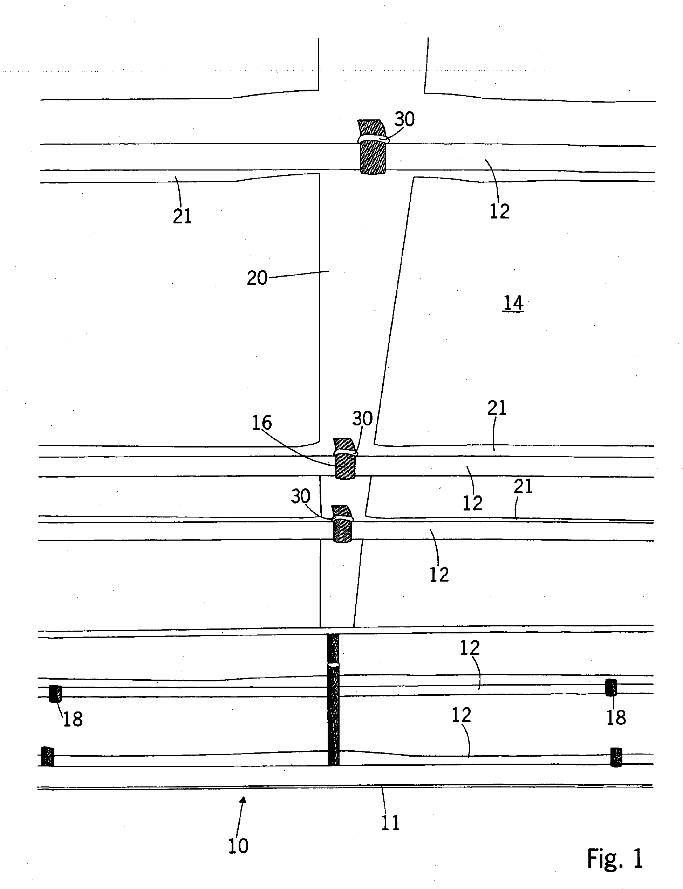

Fig. 1 zeigt in einer perspektivischen Ansicht von unten einen Planenaufbau 10 für einen Container, dessen eines Ende mit 11 angedeutet ist. Der Planenaufbau 10 kann durch Verlagern von Holmen 12 eines Verdeckgestells entlang (nicht dargestellter) seitlicher Führungen des Containers geöffnet und geschlossen werden, wobei eine Plane 14, die an Holme 12 des Verdeckgestells angeschlossen ist, zur Freigabe einer Beladeöffnung mitgenommen wird.

Die Plane 14 reicht von einem Ende 11 bis zu einem (nicht dargestellten) gegenüberliegenden Ende des Containers, und wird von einer Mehrzahl von Holmen 12 überspannt. Ein zentraler Gurt 16 sowie zwei seitliche Gurte 18, von denen nur hintere Abschnitte zu sehen sind, sind jeweils in einer Aufnahme 20, die an der dem Holmen 12 zugekehrten Seite der Plane 14 angeschlossen ist, geführt, wobei die Aufnahme 20 und der Gurt 16 im Wesentlichen senkrecht zu dem Holmen 12 verlaufen.

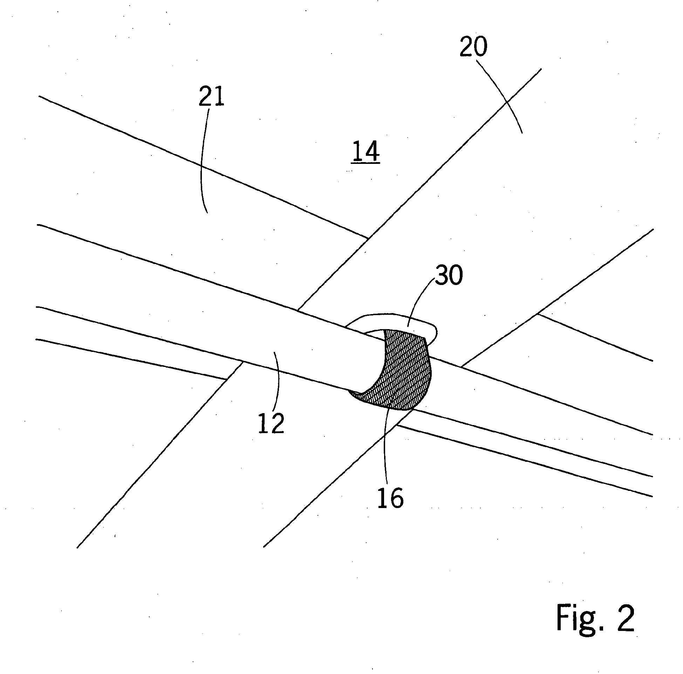

Im Bereich der Holme 12 ist aus dem selben Material wie die Aufnahme 20 auf der Innenseite der Plane 14 eine Verstärkung 21 vorgesehen, die die besonders beanspruchte Stoßstelle von Holmen 12 und Plane 14 zusätzlich schützt. Wie insbesondere in Fig. 2 zu erkennen, tritt der Gurt 16 durch eine entsprechende Aussparung der Aufnahme 20 aus dieser aus und bildet im Bereich des Holms 12 eine Schlaufe, die den Holm 12 umschlingt.

Zwischen Holm 12 und Plane 14 beziehungsweise Aufnahme 20 ist ein als Sicherungsring 30 aus Stahl ausgebildetes Sicherungsglied angeordnet, durch dessen Öffnung die Schlaufe des Gurts 16 hindurchtritt und um dessen abgerundeten Querschnitt der Gurt 16 umgelenkt wird. Wird der Gurt 16 straff gezogen, kommt es zu einer exakten Fixierung des Holms 12 bezüglich der Plane 14, wodurch in die Plane 14 eingeleitete Lasten über den Gurt 16 auf den Holm 12 des Verdeckgestells und damit in den Container übertragen werden.

Man erkennt in Fig. 2, dass der Sicherungsring 30 in etwa oval ausgebildet ist und die lange Achse des Ovals ausreichend groß bemessen ist, dass der Gurt 16 im Wesentlichen ohne in Falten gelegt zu werden umgelenkt werden kann. Man erkennt ferner, dass der schmale Innenabstand des Sicherungsrings 30 größer ist als der Außendurchmesser des Holms 12, der einen kreisförmigen Querschnitt aufweist. Bei entsprechender Auswahl des Gurts 16 kann das Sicherungsglied 30 auch als Ring mit zylindrischem Querschnitt ausgebildet sein, wobei der Innendurchmesser des Rings dann mindestens genauso groß ausfällt wie der Außendurchmesser des Holms 12.

Die Herstellung des Planenaufbaus funktioniert dann wie folgt:
Zunächst wird ein Gurt 16, 18 in eine Aufnahme 20 der Plane 14 eingeführt, wobei die Plane 14 mehrere Aufnahmen 20 aufweisen kann und vorzugsweise in jeder der Aufnahmen 20 jeweils ein Gurt 16, 18 vorgesehen ist. Die Aufnahmen 20 reichen zweckmäßigerweise von einem Ende der Plane 14 zum anderen Ende der Plane 14, und der Gurt 16, 18 ist dann entsprechend auch von einem Ende der Plane 14 bis zum anderen Ende der Plane 14 durchgehend ausgebildet. Mit der Plane 14 wird dann ein Holme 12 enthaltendes Verdeckgestell derart überspannt, dass der wenigstens eine Gurt 16, 18 senkrecht zu der Erstreckung der Holme 12 verläuft. Davor oder danach werden an den Kreuzungspositionen von Holmen 12 und Gurt 16, 18 Schlaufen des Gurts 16, 18 gebildet, die aus der Plane 14 einschließlich der Aufnahme 20 vortreten. Die Schlaufe wird dann durch die Öffnung eines Sicherungsglieds 30, das zwischen Holm 12 und Plane 14 anzuordnen ist, hindurch geführt, wobei das Sicherungsglied 30 als Umlenkglied für den Gurt 16, 18 im Bereich der Schlaufen dient, und anschließend wird die Schlaufe durch beziehungsweise mit einem Holm 12 durchsetzt, wobei der Holm 12 auch mehrteilig ausgebildet sein kann, so dass nur ein kurzes Holmstück durch die Schlaufe geführt sein muss. Schließlich wird der Gurt 16, 18 im Bereich aller Schlaufen und an seinen Enden gestrafft und an zumindest einem der Enden mit einem festen oder beweglichen Teil des Verdeckgestells oder des zu überbauenden Fahrzeugs verbunden, beispielsweise mit einem verschiebbaren Endlaufwagen einerseits und mit einer Ladebordwand oder Containerwand andererseits. Zweckmäßigerweise wird der Gurt 16, 18 dabei so gestrafft, dass bei geschlossenem Endlaufteil die Plane 14, jedenfalls aber der Gurt 16, 18 relativ straff gespannt ist, so dass die Plane 14 keine Mulden bildet, in denen Regenwasser oder Schnee liegen bleiben könnten. Ferner wird hierdurch ein mögliches Flattern im Fahrtwind reduziert.

Ist der Gurt 16, 18 einmal gespannt, sind die Holme 12 zuverlässig an den entsprechenden Kreuzungspositionen mit den Gurten 16, 18 beziehungsweise mit der Plane 14 fixiert, und auch bei mehrmaligem Öffnen und Schließen des Verdeckgestells kommt es nicht zu einem schleichenden Verrutschen.

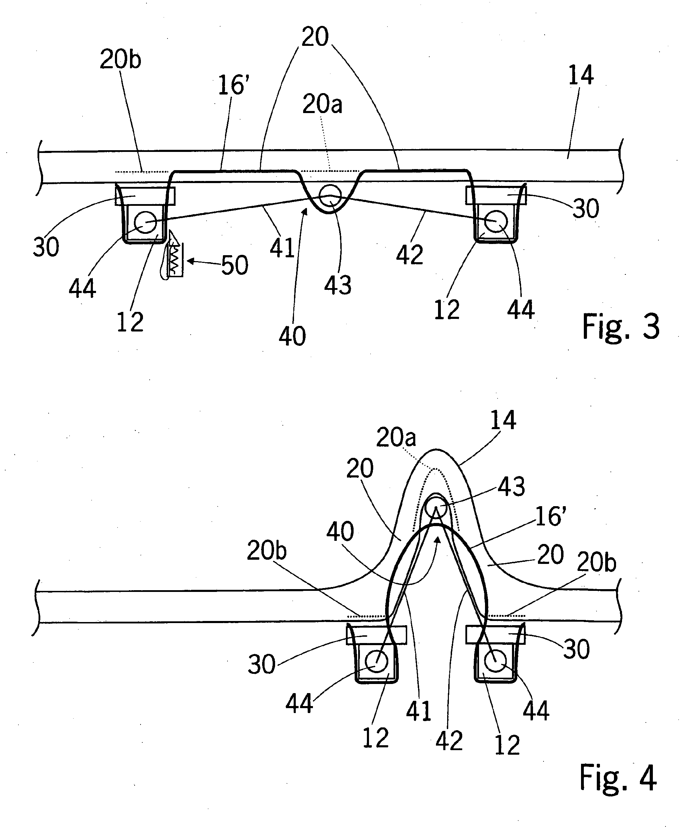

In Fig. 3 und 4, 5 und 6, 7 und 8 sowie 9 und 10 ist jeweils in einer schematischen Ansicht von der Seite eine spezielle Ausgestaltung mit einem expandierbaren Gurt 16' an Stelle des in den vorherigen Zeichnungen zugsteifen Gurtes 16 erläutert. Um die gezeigten Elemente in den Ansichten besser voneinander unterscheiden zu können, handelt es sich nicht um eine realistische bzw. maßstäbliche Darstellung, denn im geschlossenen Zustand gemäß Fig. 3 ist der Gurt 16' unter Zugspannung und legt sich damit maximal an die weiteren Teile des Planenaufbaus an. Dieselben Bezugszeichen wie in Fig. 1 und 2 bezeichnen dieselben bzw. strukturell vergleichbare Teile.

Man erkennt in Fig. 3 zwei benachbarte Holme 12, die über endseitig angebrachte (nicht dargestellte) Schlitten entlang eines (nicht dargestellten) Längsträgers verlagerbar sind, wobei eine Falthilfeanordnung 40 das Aufstellen der Plane 14 bei zusammengeschobenen Holmen 12 unterstützt. Die Falthilfeanordnung 40 umfasst einen ersten Lenker 41 und einen zweiten Lenker 42, die in einem Gelenk 43 miteinander verbunden sind, wobei vorliegend das Gelenk 43 als konventionelles Zapfengelenk mit Gelenkstift und Gelenkauge ausgebildet ist. In der Verlängerung des Gelenks 43 ist ein (nicht dargestellter) Hubholm angeordnet, der mit der Plane 14 verbunden ist und die Falthilfeanordnung 40 aus Lenker 41 und 42 mit einer spiegelsymmetrischen Falthilfeanordnung auf der bezüglich der Längshalbierenden des Planenaufbaus gegenüberliegenden Seite verbindet. Ferner sind Gelenke 44 gezeigt, mit denen die Lenker 41, 42 an Schlitten, an denen die Holme 12 angeschlossen sind, schwenkbeweglich angeschlossen sind.

Man erkennt, dass die Falthilfeanordnung 40 bei der geschlossenen Stellung gemäß Fig. 3 ein sehr flaches Dreieck aufbaut, das ein flaches Liegen der Plane 14 auf den Holmen 12 und einem etwaigen Hubholm ermöglicht. Werden nun die beiden Holme 12 zusammengeschoben, führt das Dreieck, das die beiden Lenker 41, 42 auf einer gedachten Verbindungslinie der beiden Holme 12 aufbauen, dazu, dass die beiden Lenker 41, 42 im Bereich ihrer gelenkigen Verbindung 43 nach oben auswandern und damit die Plane 14 anheben. Man erkennt ferner, dass auf der dem Fahrzeuginnenraum zugekehrten Seite der Plane 14 Aufnahmen 20 vorgesehen sind, in denen der elastische Gurt 16' abschnittsweise geführt ist.

Der Gurt 16' ist hierbei wie bereits beschrieben über ein ringförmiges Sicherungsglied 30 an den Holmen 12 fixiert. Hierdurch wird unter anderem erreicht, dass der Gurt 16', der sich auch außerhalb der beiden dargestellten Holme 12 fortsetzt, nicht durch das Sicherungsglied hindurch gleitet, und seine Position bezüglich der Holme 12 nicht verändert.

Man erkennt weiter, dass der Gurt 16' im Bereich des Gelenks 43 unter dem in Verlängerung des Gelenks 43 angeordneten Hubholm geführt ist; im Bereich des Gelenks 43 ist ein länglicher Schlitz 20a ausgebildet, der einen Durchgang zum Fahrzeuginneren, also in Fig. 3 gesehen nach unten, ermöglicht, wobei der Gurt 16' aus diesem Schlitz 20a austreten kann. Weiter ist in Fig. 3 eine Öffnung 20b der Aufnahme 20 dargestellt, die das Ein- und Austreten der Schlaufe des Gurtes 16' ermöglicht. Im Gegensatz zu der schematischen Darstellung ist allerdings zu berücksichtigen, dass der Schlitz 20a mindestens doppelt so lang ist wie die Öffnung 20b, in der Regel sogar drei bis zehnmal so lang, vorzugsweise vier bis siebenmal. Insoweit dient die schematische Darstellung nur zur Erläuterung, an welcher Stelle der Schlitz 20a bzw. die Öffnung 20b angeordnet ist. Weiter ist zu verstehen, dass der Schlitz 20a bzw. die Öffnung 20b auch eine an den die Breite des Gurtes 16' angepasste Breite aufweisen sollten, um den Durchtritt des Gurts ohne Verdrehen oder Einschnüren zu ermöglichen.

In Fig. 3 steht der expandierbare Gurt 16' unter einer deutlichen Vorspannung, das heißt der Gurt strebt eine Position an, in der er sich zusammengezogen hat. Die hierdurch auf die Holme 12 übertragene Kraft ergibt sich aus den Eigenschaften des expandierbaren Gurts 16', insbesondere dessen E-Modul oder die Federkonstante. Man erkennt ohne weiteres, dass auch der mittlere Bereich des Gurtes 16' sich tatsächlich in etwa in der Höhe der gepunkteten Linie des Schlitzes 20a anordnen wird, wenn kein Hubholm vorgesehen ist.

Wird nun ein Ende des Planenaufbaus geöffnet, beispielsweise durch Freigabe eines Portals oder einer in Fig. 3 mit 50 schematisch dargestellten Verriegelung, zieht sich der als Expander 16' ausgebildete Gurt zusammen, wodurch sich die beiden benachbarten Holme 12 annähern. Durch die Annäherungsbewegung entlang des (nicht dargestellten) Längsträgers wird die Falthilfeanordnung 40 angehoben, das heißt im Bereich des Gelenks 43 wird die Plane 14 in eine Falte gelegt. Da die Bewegung des in Fig. 3 linken Holms 12 in Richtung auf den in Fig. 3 rechten Holm zugleich eine Verkürzung des Gurtes 16' erfordert, folgt der Gurt 16' nicht der vollständigen Faltbewegung der Plane 14, sondern verbleibt nur in den Bereichen, in denen er in der Aufnahme 20 geführt ist, an die Plane angeschlossen, während er aus dem Schlitz 20a austritt, so dass der Faltenwurf des Gurtes 16' deutlich weniger hoch ausfällt als der Faltenwurf der Plane 14. In Fig. 4 ist dies schematisch dargestellt, wobei zur besseren Veranschaulichung die beiden Holme 12 nicht vollständig zusammengefahren sind. Die Verkürzung des Weges des Gurtes 16' hat somit die zum Aufstellen der Plane 14 im Bereich des Gelenks 43 erforderliche Kraft verringert oder vollständig erbracht, so dass hierdurch vorteilhaft die Gewichtskraft des Planenaufbaus in diesem Bereich nicht manuell überwunden werden muss.

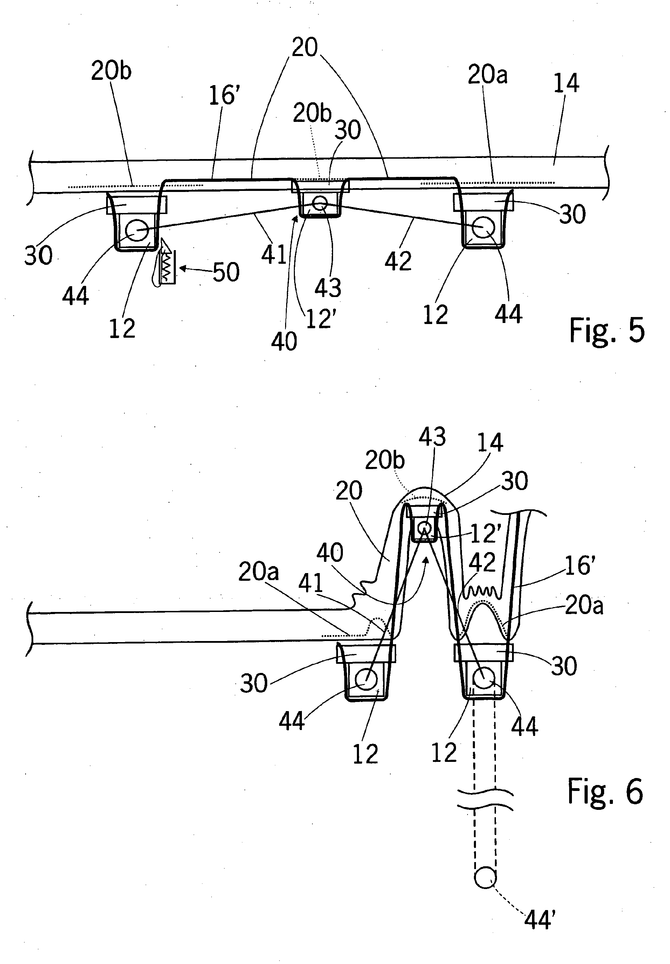

Man erkennt in Fig. 5 und 6 wiederum zwei benachbarte Holme 12, die über endseitig angebrachte (nicht dargestellte) Schlitten entlang eines (nicht dargestellten) Längsträgers verlagerbar sind, wobei eine Falthilfeanordnung 40 das Aufstellen der Plane 14 bei zusammengeschobenen Holmen 12 unterstützt. Die Falthilfeanordnung 40 umfasst einen ersten Lenker 41 und einen zweiten Lenker 42, die in einem Gelenk 43 miteinander verbunden sind, wobei vorliegend die gegenüberliegenden Gelenke 43 so ausgebildet sind, dass ein Hubholm 12' zwischen den Gelenken 43 angeordnet ist, der mit der Plane 14 verbunden ist und die Falthilfeanordnung 40 aus Lenker 41 und 42 mit einem spiegelsymmetrischen Falthilfeanordnung auf der bezüglich der Längshalbierenden des Planenaufbaus gegenüberliegenden Seite verbindet. Ferner sind Gelenke 44 gezeigt, mit denen die Lenker 41, 42 an Schlitten, an denen die Holme 12 angeschlossen sind, schwenkbeweglich angeschlossen sind.

Man erkennt, dass die Falthilfeanordnung 40 bei der geschlossenen Stellung gemäß Fig. 5 ein sehr flaches Dreieck aufbaut, das ein flaches Liegen der Plane 14 auf den Holmen 12 und dem Hubholm 12' ermöglicht. Werden nun die beiden nicht anhebbaren Holme 12 zusammengeschoben, führt das Dreieck, das die beiden Lenker 41, 42 auf einer gedachten Verbindungslinie der beiden Holme 12 aufbauen, dazu, dass die beiden Lenker 41, 42 im Bereich ihrer gelenkigen Verbindung 43 mit dem Hubholm 12' nach oben auswandern und damit die Plane 14 anheben. Man erkennt ferner, dass auf der dem Fahrzeuginnenraum zugekehrten Seite der Plane 14 Aufnahmen 20 vorgesehen sind, in denen der elastische Gurt 16' abschnittsweise geführt ist.

Der Gurt 16' ist hierbei - vergleichbar der Anbindung an den Holm 12 in dem vorhergehenden Ausführungsbeispiel - ringförmiges Verbindungsglied 30 an dem als Hubholm ausgebildeten Holm 12' fixiert. Auch die Holme 12 sind über Verbindungsglieder 30 an den Gurt 16' angeschlossen. In dieser Ausführung wird unter anderem erreicht, dass der Gurt 16', der sich auch außerhalb der beiden dargestellten Holme 12 fortsetzt, nicht durch das Sicherungsglied 30 hindurch gleitet, und seine Position bezüglich der Holme 12, 12' nicht verändert. Damit wird vorteilhaft erreicht, dass der als Expander ausgebildete Gurt, der auch bandförmig sein kann, aber nicht muss, das Anheben der Lenker 41, 42 durch sich Zusammenziehen erreicht.

Man erkennt weiterhin, dass der im Bereich des Gelenks 43 ist eine kurze Öffnung 20b ausgebildet ist, der beiderseits des Sicherungsrings 30 das Ein- und Austreten der Schlaufe des Gurtes 16'in die Aufnahme 20 ermöglicht. Hingegen ist im Bereich der nicht anhebbaren Holme 12 ein Schlitz 20a vorgesehen, der deutlich länger ist, als für den Anschluss der Plane 14 an den Holm 12 erforderlich und als die Öffnung 20b.

Im Gegensatz zu der schematischen Darstellung ist allerdings zu berücksichtigen, dass der Schlitz 20a mindestens doppelt so lang ist wie die Öffnung 20b, in der Regel sogar drei bis zehnmal so lang, vorzugsweise vier bis siebenmal. Insoweit dient die schematische Darstellung nur zur Erläuterung, an welcher Stelle der Schlitz 20a bzw. die Öffnung 20b angeordnet ist. Weiter ist zu verstehen, dass der Schlitz 20a bzw. die Öffnung 20b auch eine an den die Breite des Gurtes 16' angepasste Breite aufweisen sollten, um den Durchtritt des Gurts 16' ohne Verdrehen oder Einschnüren zu ermöglichen.

In Fig. 5 steht der expandierbare Gurt 16' unter einer deutlichen Vorspannung, das heißt der Gurt 16' strebt eine Position an, in der er sich zusammengezogen hat. Die hierdurch auf die Holme 12 übertragene Kraft ergibt sich aus den Eigenschaften des expandierbaren Gurts 16', insbesondere dessen E-Modul oder die Federkonstante.

Wird nun ein Ende des Planenaufbaus geöffnet, beispielsweise durch Freigabe eines Portals oder einer in Fig. 5 mit 50 schematisch dargestellten Verriegelung, zieht sich der als Expander 16' ausgebildete Gurt zusammen, wodurch sich die beiden benachbarten Holme 12 annähern. Durch die Annäherungsbewegung entlang des (nicht dargestellten) Längsträgers wird die Falthilfeanordnung 40 angehoben, das heißt im Bereich des Gelenks 43 mit Hubholm 12' wird die Plane 14 in eine Falte gelegt. Da die Bewegung des in Fig. 5 linken Holms 12 in Richtung auf den in Fig. 5 rechten Holm durch eine Verkürzung des vorgespannten Gurtes 16' erfolgt, und der Gurt 16' in dem Sicherungsring 30 des Hubholms 12' fest gehalten ist, drängt der an den Holm 12 angeschlossene Teil des Gurtes 16' unter seiner Vorspannung in Richtung auf den benachbarten Hubholm 12'. Im Gegensatz zu der Öffnung 20b im Bereich des Hubholms 12', aus der auszutreten der Gurt 16' praktisch keinen Spielraum hat, ist der Schlitz 20a ausreichend lang bemessen, dass der Punkt, an dem der Gurt 16' aus der Aufnahme 20 austritt, von dem mittleren Bereich des Schlitzes 20a zu dessen Extremität hin verlagert. Hierdurch wird erreicht, dass der Längenbereich der Aufnahme 20, über den der Gurt 16' aufgenommen ist, verkürzt wird, wobei die Plane 14 in einen Abschnitt oberhalb des Holms 12 in eine oder mehrere Falten geworfen und zusammengelegt wird. Hierbei entsteht zumindest ein kleiner Faltenberg, der oberhalb des Holms 12 zusammengeschoben ist und der Teil der Faltung der Plane 14 ist. Hierbei folgt der Gurt 16' nicht der vollständigen Faltbewegung der Plane 14, sondern verbleibt nur in den Bereichen, in denen er in der Aufnahme 20 geführt ist, an die Plane angeschlossen, während er aus dem Schlitz 20a austritt. In Fig. 6 sind zur besseren Veranschaulichung die beiden Holme 12 nicht vollständig zusammengefahren. Die Verkürzung des Weges des Gurtes 16' hat somit die zum Aufstellen der Plane 14 im Bereich des Gelenks 43 erforderliche Kraft verringert oder vollständig erbracht, so dass hierdurch vorteilhaft die Gewichtskraft des Planenaufbaus in diesem Bereich nicht manuell überwunden werden muss.

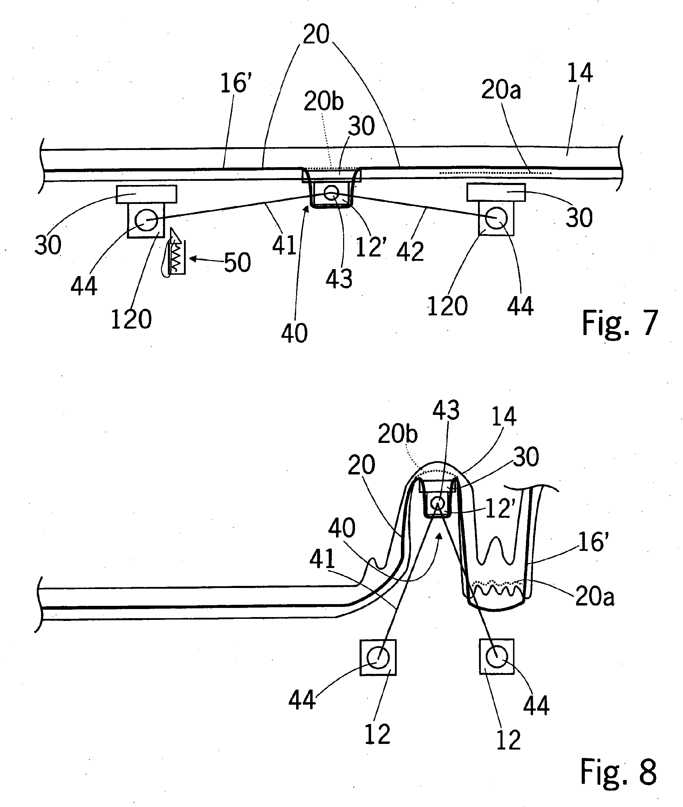

Die Ausführung gemäß Fig. 7 und 8 bildet das Ausführungsbeispiel gemäß Fig. 5 und 6, deren Bezugszeichen zur Vermeidung von Wiederholungen weiter verwendet werden, dahingehend weiter, dass nur an den Hubholmen 12' über einen ringförmigen Sicherungsring 30 ein elongierbarer Gurt 16' angeschlossen ist. Entsprechend ist den Holmen 12 kein Sicherungsring 30 mehr zugeordnet.

Der Gurt 16' verläuft wiederum in Aufnahmen 20 der Plane 14, die im Bereich des Hubholms wiederum eine Öffnung 20b und im Bereich des Holms 12 einen länglichen Schlitz 20a aufweisen. Hingegen ist der Gurt 16' nicht um die Holme 12 geführt, sondern liegt oberhalb des Holms 12 in der Ebene des Schlitzes 20b in der Plane 14 bzw. in der Flucht der Aufnahme 20. Dies ist in Fig. 7 durch die punktierte Linie für den länglichen Schlitz 20a und fast in derselben Ebene horizontal verlaufenden Gurt 16' angedeutet. In der Stellung gemäß Fig. 7 ist der elastische Gurt 16' gespannt, und zwar im Wesentlichen zwischen zwei benachbarten Hubholmen 12', und der Gurt 16' versucht die benachbarten Hubholme 12' zusammenzuziehen, um sich zu entspannen.

In Fig. 8 erkennt man, dass durch die von dem Holm 12 getrennte Anordnung des Gurts 16' dieser bei zusammengeschobenem Verdeckgestell bzw. Planenaufbau von dem Holm 12, zu dem keine direkte Verbindung von Gurt 16' oder Plane 14 mehr besteht, angehoben wird. Hierdurch wird auch die Plane 14 angehoben, wobei die Verkürzung der Länge des Gurts 16' durch seine Entspannung dazu führt, dass die Plane 14 im Bereich des Schlitzes 20a zusammengefaltet ist und sich als - gegenüber der angehobenen Stellung des Hubholms 12' - kleiner Berg oberhalb des Holms 12 ausbildet. Ferner kann vorgesehen sein, dass die Plane 14 in Randbereichen des Holms 12 noch an diesem angeschlossen ist, um zu vermeiden, dass die Plane 14 insgesamt angehoben wird.

Wird der Planenaufbau wieder geschlossen, spannt dies den elastischen Gurt 16', wodurch - in Folge des Absenkens der Hubholme 12' - zugleich die Plane 20 auch im Bereich der Holme 12 nach unten gespannt wird.

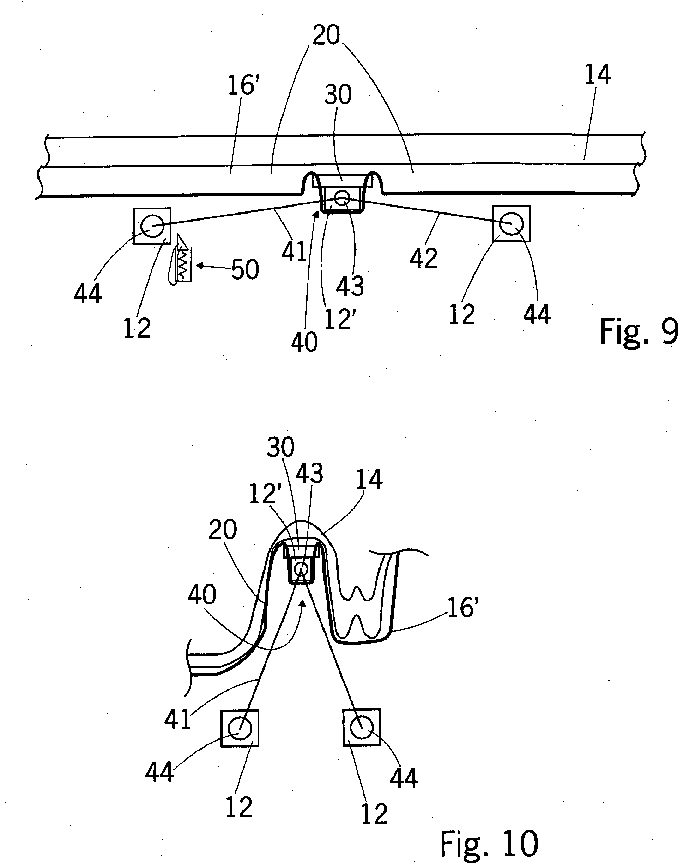

Die Ausführung gemäß Fig. 9 und 10 bildet das Ausführungsbeispiel gemäß Fig. 7 und 8, deren Bezugszeichen zur Vermeidung von Wiederholungen weiter verwendet werden, dahingehend weiter, dass der elongierbare Gurt 16' nicht mehr in Aufnahmen 20 der Plane 14 geführt ist, sondern außerhalb des Anschlusses an einen Hubholm 12' über einen Sicherungsring 30 und vorzugsweise insgesamt unterhalb der Plane 14 angeordnet ist. Hierdurch kann auf eine Aufnahme 20 ebenso verzichtet werden wie auf deren Schlitze 20a und Öffnungen 20b.

Demnach kann sich der elastische Gurt 16' über seine gesamte außerhalb des Sicherungsrings 30 verlaufende Länge entspannen, und die Plane 20 wird oberhalb des Holms 20 durch den Gurt 16' noch ein wenig weiter nach oben angehoben, während sie sich faltet.

Wird der Planenaufbau wieder geschlossen, spannt sich der Gurt 16' wieder. Auch die dann wieder gestreckte Plane 14 kommt wieder in Anlage mit den Holmen 12. Um die Plane 14 beim Absenken des Hubholms 21' wieder mitzunehmen, dann die Plane an den Hubholm 12' angeschlossen sein, beispielsweise indem im Bereich des Hubholms 12' ein sehr kurzer Aufnahmeabschnitt in der Art der Aufnahme 20, aber eher in der Länge einer Lasche ausgeführt, von dem Gurt 16' durchsetzt wird.

Es ist zu beachten, dass der Effekt eines elastischen Gurts besonders vorteilhaft ausfällt, wenn der Abstand zwischen dem Gelenk 43 und der Anlenkung 44 deutlich größer ist als die Länge des Gurtes. Dies ist in Fig. 6 beispielhaft mit der gestrichelten Anlenkung 44' eines U-förmigen Bügels, dessen Basis der Holm 12 ist, angedeutet, und gilt auch für die weiteren Ausführungsbeispiele. Es versteht sich, dass die Lenker 41, 42 in dieser und in anderen Konstellationen entbehrlich sind, so dass diese dann nicht vorgesehen werden. Ferner ist zu beachten, dass die zeichnerische Darstellung der Verlängerung bzw. der Verkürzung des elastischen Gurtes in erster Linie zur Erläuterung der Bewegung und Anordnung gewählt wurde, und bei der Umsetzung an die tatsächlichen Gegebenheiten des Planenaufbaus anzupassen ist.

Beim Verschließen des Planenaufbaus unterstützt die Gewichtskraft der Teile des Verdeckgestells bzw. des Planenaufbaus die Schließbewegung, so dass insgesamt eine ganz besonders leichte und einfache Manipulation des Planenaufbaus gegeben ist.

Man erkennt weiterhin in Fig. 3 bzw. 5, 7 oder 9, dass eine Riegelanordnung 50 mit einer einseitigen Rampe, realisiert durch eine einseitige Keilform, ausgebildet ist, und unter Vorspannung in Schließrichtung angeordnet ist. Wird die Riegelanordnung 50 manuell in Freigabeposition gehalten, öffnet sich der Planenaufbau zumindest teilweise von alleine, während in Schließrichtung der Rampenabschnitt durch den Schlitten überfahren wird und so die Riegelanordnung 50 gegen die Vorspannung der Feder zurückgedrängt wird, so dass ein sich selbst verriegelndes System geschaffen ist. Durch die Riegelanordnung ist zugleich eine Verriegelung des Schlittens geschaffen, die ein Hin- und Herrutschen unter der Vorspannung des expandierbaren Gurtes 16' oder unter Überdehnen desselben verhindert. Die Verriegelungsanordnung 50 kann über eine Schlaufe von einer externen Bedienperson ausgelöst werden.

Es ist ohne weiteres erkennbar, dass an Stelle des als durchgehender Expander 16' ausgebildeten Gurtes der expandierbare Gurt auch dadurch ausgebildet sein kann, dass zwischen Gurtabschnitten elongierbare Federn angeordnet sind, die dann allerdings einen recht langen Federweg zum Zusammenziehen der Holme 12, 12' ausführen können müssen.

Vorstehend sind mehrere Ausführungsbeispiele beschrieben worden, wie ein elastischer Gurt 16' als Aufstellhilfe für ein Verdeckgestell eingesetzt werden kann. Es versteht sich, dass zwei oder mehr dieser Ausführungsbeispiele auch bei einem gemeinsamen Verdeckgestell nebeneinander zum Einsatz kommen können, insbesondere über die Längserstreckung des Verdeckgestells jeweils Teilen des Verdeckgestells zugeordnet werden können. Auch können verschiedene Ausführungen von Aufstellhilfen zugleich an einem Verdeckgestell angeordnet werden, beispielsweise andere Federmittel mit den vorstehend erläuterten elastischen Gurten 16'. Es versteht sich ferner, dass ein elastischer Gurt 16' auch anders als durch einen Sicherungsring 30 an einen Holm 12 oder Hubholm 12' angeschlossen werden kann.

Aus dem Vergleich von Fig. 3 und 4 einerseits und Fig. 5 bis 10 andererseits erkennt man, dass das Festlegen des elastischen Gurts 16' wahlweise an einem von Holm 12 oder Hubholm 12' erfolgen kann - entsprechend können auch andere Merkmale der vorstehend beschriebenen Ausführungsbeispiele angepasst bzw. miteinander kombiniert werden.

Die Erfindung ist vorstehend an Hand eines Ausführungsbeispiels beschrieben worden, bei dem der Planenaufbau einen Container überbaut; es versteht sich, dass in gleicher Weise ein Dachschiebeverdeck eines Lastkraftwagens oder eines Bahnwaggons überbaut sein kann, oder aber eine Seitenplane an dann vertikale Holme, beispielsweise als Schieberungen ausgebildet, angeschlossen sein kann. Ferner kann der Planenaufbau auch als Schiebebügelverdeck ausgebildet sein, bei dem die Plane über den Gurt an die Bügel oder Hilfsbügel angeschlossen ist.

Die Erfindung ist vorstehend an Hand von Holmen 12 beschrieben worden, die einen kreisförmigen Querschnitt aufweisen, und die sich besonders gut für das Umschließen mit einem Gurt eignen; es versteht sich, dass auch Holme mit polygonalem Querschnitt, beispielsweise eine Schieberunge, zum Einsatz kommen können.

Die Erfindung ist vorstehend an Hand eines Sicherungsrings 30 aus Stahl erläutert worden. Es versteht sich, dass auch Sicherungsringe aus Kunststoff oder anderen Materialien in Betracht kommen.

Die Erfindung ist vorstehend an Hand eines losen Sicherungsrings 30 beschrieben worden. Es versteht sich, dass der Sicherungsring 30 auch zusammen mit der Aufnahme 20 fest an die Plane 14 angeschlossen sein kann, so dass die Montage noch weiter vereinfacht und beschleunigt wird.

Die Erfindung ist vorstehend anhand eines Ausführungsbeispiels erläutert worden, bei dem ein einstückiger durchgehender Gurt 16 über die gesamte Länge der Plane 14 verläuft. Es versteht sich, dass der Gurt auch aus mehreren Teilgurten zusammengesetzt sein kann. Es versteht sich ferner, dass der Gurt oder die Teilgurte auch aus expandierbaren Teilen und nicht expandierbaren Teilen zusammengesetzt sein können.

Die Erfindung ist vorstehend anhand eines expandierbaren Gurts erläutert worden, der einen Abschnitt zwischen zwei benachbarten nicht anhebbaren Holmen überspannt, wodurch vorteilhaft der Gurt nur bei Anheben der Plane wesentlich aus der Aufnahme austritt und nicht in den Ladebereich herabfällt. Es versteht sich, dass an Stelle des expandierbaren Gurts auch ein anderes Federglied in den Gurt integriert sein kann, beispielsweise eine Schraubenfeder, die im Bereich des Schlitzes angeordnet ist und beidendig oder einendig mit dem Gurt verbunden ist.

Die Erfindung ist vorstehend anhand von Ausführungsbeispielen erläutert worden, bei denen die gelenkige Kopplung von Holmen und Hubholmen mittels Lenkern 46, 42 erfolgt. Es versteht sich, dass diese weder in einem gemeinsamen Gelenk an den Holmen 12, 12' angeschlossen sein müssen noch dass die Kopplung der Holme 12, 12' überhaupt Lenker 41, 42 erfordert. So kann der Holm 12 als Basis eines im Wesentlichen umgedreht U-förmigen Bügels ausgebildet sein, der beispielsweise an einem verlagerbaren Schlitten unschwenkbar angeordnet ist, während der Hubholm 12' als Basis eines im Wesentlichen umgedreht U-förmigen Hilfsbügels ausgebildet sein kann, der an dem Schlitten oder an dem Bügel gelenkig angeschlossen ist.

## Patentansprüche

1. Planenaufbau für ein Nutzfahrzeug, wie einen Lastkraftwagen, Anhänger, Auflieger, Bahnwaggon oder Container, umfassend
ein Verdeckgestell,
eine Plane (14) aus wetterbeständigem Material, und
einen Gurt (16'),
wobei die Plane (14) an zumindest einen verlagerbaren Holm (12; 12') des Verdeckgestells angeschlossen ist, und
wobei der Gurt (16') quer zu dem zumindest einen Holm (12; 12') verläuft,
wobei der Gurt (16') im geschlossenen Zustand der Plane (14) zumindest teilweise gespannt ist,
wobei der Gurt (16') expandierbar ausgebildet ist,
**dadurch gekennzeichnet,**
**dass** der Gurt (16') in einer Aufnahme (20) der Plane (14) aufgenommen ist, und
**dass** die Aufnahme (20) einen Schlitz (20a) aufweist, durch den der entspannte und damit verkürzte Gurt (16') in einem geöffnetem Zustand der Plane (14) austreten kann.

2. Planenaufbau nach Anspruch 1, **dadurch gekennzeichnet, dass** der Gurt (16') auch im geöffneten Zustand der Plane (14) zumindest teilweise gespannt ist, dass der Gurt (16') an dem zumindest einen Holm (12; 12') angeschlossen ist und eine Öffnungshilfe für den Planenaufbau bildet.

3. Planenaufbau nach Anspruch 1 oder 2, **dadurch gekennzeichnet, dass** der Gurt (16') mehrere Abschnitte umfasst, von denen zumindest einige als Federmittel ausgebildet sind.

4. Planenaufbau nach einem der Ansprüche 1 bis 3, **dadurch gekennzeichnet, dass** der Gurt (16') mehrere Abschnitte umfasst, von denen zumindest einige zugsteif ausgebildet sind.

5. Planenaufbau nach einem der Ansprüche 1 bis 4, **dadurch gekennzeichnet, dass** der Schlitz (20a) in einem Bereich vorgesehen ist, der in etwa mittig zwischen zwei Anschlüssen des Gurts (16') an jeweils einen benachbarten Holm (12; 12') liegt.

6. Planenaufbau nach einem der Ansprüche 1 bis 5, **dadurch gekennzeichnet, dass** der Gurt (16') im Bereich des Schlitzes (20a) bei geöffneter Plane (14) von der Aufnahme (20) und damit von der Plane (14) beabstandet angeordnet ist.

7. Planenaufbau nach einem der Ansprüche 1 bis 6, **dadurch gekennzeichnet, dass** der Gurt (16') im Bereich jedes nicht angehobenen Holms (12) festgelegt ist, und dass der Gurt (16') nur einen Bereich zwischen zwei nicht angehobenen Holmen (12) in Öffnungsrichtung vorspannt.

8. Planenaufbau nach einem der Ansprüche 1 bis 7, **dadurch gekennzeichnet, dass** der Gurt (16') im Bereich jedes angehobenen Holms (12') und jedes nicht angehobenen Holms (12) festgelegt ist, und dass der Gurt (16') einen Bereich zwischen benachbarten angehobenem Holm (12') und nicht angehobenem Holm (12) in Öffnungsrichtung vorspannt.

9. Planenaufbau nach einem der Ansprüche 1 bis 7, **dadurch gekennzeichnet, dass** der Gurt (16') im Bereich jedes angehobenen Holms (12') festgelegt ist, und dass der Gurt (16') nur einen Bereich zwischen zwei angehobenen Holmen (12') in Öffnungsrichtung vorspannt.

10. Planenaufbau nach Anspruch 9, **dadurch gekennzeichnet, dass** der Gurt (16') unterhalb der Plane (14) verläuft.

11. Planenaufbau nach einem der Ansprüche 1 bis 10, **dadurch gekennzeichnet, dass** zwischen benachbarten Holmen (12) - zumindest - gelenkige Verbindungen (41, 42), vorzugsweise einschließlich auch eines die gegenüberliegenden Verbindungen im Bereich eines Gelenks (43) miteinander verbindenden Hubholms (12'), vorgesehen sind, und dass die Verbindungen (41, 42) die Plane (14) beim Öffnen falten.

12. Planenaufbau nach Anspruch 11,
**dadurch gekennzeichnet, dass** der Gurt (16') zwischen benachbarten Holmen (12) im geschlossenen Zustand der Plane (14) in etwa gleich der Länge der Verbindungen (41, 42) zwischen zwei Holmen (12) ist, während der Gurt (16') im geöffneten Zustand der Plane (14) kürzer als die Länge der Verbindungen (41, 42) zwischen zwei Holmen (12) ist.

13. Planenaufbau nach einem der vorhergehenden Ansprüche, **dadurch gekennzeichnet, dass** der zumindest eine Holm (12) über endseitig angebrachte Schlitten zum Öffnen und Schließen des Planenaufbaus verlagerbar ist, und dass der zumindest eine Holm (12) als Spriegel eines Verdeckgestells eines Dachs oder als Runge einer Seitenwand ausgebildet ist.

14. Planenaufbau nach einem der vorhergehenden Ansprüche, **dadurch gekennzeichnet, dass** eine Schlaufe des Gurts (16; 18; 16') um zumindest einen Holm (12; 12') gelegt ist, und dass ein Sicherungsglied (30) zwischen Holm (12; 12') und Plane (14) als Umlenkglied für den Gurt (16; 18; 16') angeordnet ist und den Holm (12; 12') bezüglich des Gurtes (16; 18; 16') reibschlüssig fixiert.

15. Planenaufbau nach Anspruch 14, **dadurch gekennzeichnet, dass** das Sicherungsglied (30) als kreisförmiger oder ovaler Sicherungsring, insbesondere als Stahlring, ausgebildet ist, dass die maximale Breite des Sicherungsrings (30) nicht kleiner ist als die Breite des Gurtes (16; 18; 16'), und dass das Sicherungsglied (30) einen größerem Umfang oder Durchmesser aufweist als der zumindest eine Holm (12; 12').

## Claims

1. Tarpaulin structure for a commercial vehicle, such as a lorry, trailer, semitrailer, railway wagon or container, comprising
a folding top framework,
a tarpaulin (14) composed of weather-resistant material, and
a strap (16'),
wherein the tarpaulin (14) is connected to at least one diplaceable beam (12; 12') of the folding top framework, and
wherein the strap (16') runs transversely with respect to the at least one beam (12; 12'),
wherein the strap (16') is at least partially tensioned in the closed state of the tarpaulin (14),
wherein the strap (16') is of expandable design,
**characterized in**
**that** the strap (16') is accommodated in a receptacle (20) of the tarpaulin (14), and
**that** the receptacle (20) has a slot (20a) through which the relaxed and therefore shortened strap (16') can emerge in an open state of the tarpaulin (14).

2. Tarpaulin structure according to claim 1, **characterized in that** the strap (16') is also at least partially tensioned in the open state of the tarpaulin (14), that the strap (16') is connected to the at least one beam (12' 12') and forms an opening aid for the tarpaulin structure.

3. Tarpaulin structure according to claim 1 or 2, **characterized in that** the strap (16') comprises a plurality of sections, of which at least some are designed as spring means.

4. Tarpaulin structure according to one of claims 1 to 3, **characterized in that** the strap (16') comprises a plurality of sections, of which at least some are designed to be stiff in tension.

5. Tarpaulin structure according to one of claims 1 to 4, **characterized in that** the slot (20a) is provided in a region which lies approximately centrally between two connections of the strap (16') to in each case an adjacent beam (12, 12').

6. Tarpaulin structure according to one of claims 1 to 5, **characterized in that**, when the tarpaulin (14) is open, the strap (16') in the region of the slot (20a) is arranged spaced apart from the receptacle (20) and therefore from the tarpaulin (14).

7. Tarpaulin structure according to one of claims 1 to 6, **characterized in that** the strap (16') is secured in the region of each non-raised beam (12), and **in that** the strap (16') pretensions only a region between two non-raised beams (12) in the opening direction.

8. Tarpaulin structure according to one of claims 1 to 7, **characterized in that** the strap (16') is secured in the region of each raised beam (12') and each non-raised beam (12), and that the strap (16') pretensions a region between an adjacent raised beam (12') and a non-raised beam (12) in the opening direction.

9. Tarpaulin structure according to one of claims 1 to 7, **characterized in that** the strap (16') is secured in the region of each raised beam (12'), and that the strap (16') pretensions only a region between two raised beams (12') in the opening direction.

10. Tarpaulin structure according to claim 9, **characterized in that** the strap (16') runs below the tarpaulin (14).

11. Tarpaulin structure according to one of claims 1 to 10, **characterized in that** - at least - articulated connections (41, 42), preferably also including a lifting beam (12') connecting the opposite connections to each other in the region of a joint (43) are provided between adjacent beams (12), and that the connections (41, 42) fold the tarpaulin (14) during the opening.

12. Tarpaulin structure according to claim 11, **characterized in that**, in the closed state of the tarpaulin (14), the strap (16') between adjacent beams (12) is approximately identical to the length of the connections (41, 42) between two beams (12) while, in the open state of the tarpaulin (14), the strap (16') is shorter than the length of the connections (41, 42) between two beams (12).

13. Tarpaulin structure according to one of the preceding claims, **characterized in that** the at least one beam (12) can be shifted via carriages attached on the end sides in order to open and close the tarpaulin structure, and that the at least one beam (12) is designed as a hoop of a sliding top framework of a roof or as a stanchion of a side wall.

14. Tarpaulin structure according to one of the preceding claims, **characterized in that** a loop of the strap (16; 18; 16') is placed around at least one beam (12; 12'), and that a securing member (30) between beam (12; 12') and tarpaulin (14) is arranged as a deflecting member for the strap (16; 18; 16') and fixes the beam (12; 12') in a frictionally locking manner with respect to the strap (16; 18; 16').

15. Tarpaulin structure according to claim 14, **characterized in that** the securing member (30) is designed as a circular or oval securing ring, in particular as a steel ring, that the maximum width of the securing ring (30) is not smaller than the width of the strap (16; 18; 16'), and that the securing member (30) has a larger circumference or diameter than the at least one beam (12; 12').

## Revendications

1. Structure de bâche destinée à un véhicule utilitaire, tel qu'un camion, une remorque, une semi-remorque, un wagon de chemin de fer ou un conteneur, la structure de bâche comprenant
un bâti de capote,
une bâche (14) en matériau résistant aux intempéries, et
une sangle (16'),
la bâche (14) étant raccordée à au moins un longeron déplaçable (12 ; 12') du bâti de capote, et
la sangle (16') s'étendant transversalement à l'au moins un longeron (12 ; 12'),
la sangle (16') étant au moins partiellement tendue lorsque la bâche (14) est fermée,
la sangle (16') étant conçue pour être extensible,
**caractérisée en ce**
**que** la sangle (16') est reçue dans un logement (20) de la bâche (14), et que le logement (20) comporte une fente (20a) par laquelle la sangle (16') détendue et donc raccourcie peut sortir lorsque la bâche (14) est ouverte.

2. Structure de bâche selon la revendication 1, **caractérisée en ce que** la sangle (16') est au moins partiellement tendue même lorsque la bâche (14) est ouverte, que la sangle (16') est raccordée à l'au moins un longeron (12 ; 12') et forme une aide à l'ouverture de la structure de bâche.

3. Structure de bâche selon la revendication 1 ou 2, **caractérisée en ce que** la sangle (16') comprend une pluralité de parties dont au moins certaines sont conçues comme des moyens à ressort.

4. Structure de bâche selon l'une des revendications 1 à 3, **caractérisée en ce que** la sangle (16') comprend une pluralité de parties dont au moins certaines sont conçues pour être rigides en traction.

5. Structure de bâche selon l'une des revendications 1 à 4, **caractérisée en ce que** la fente (20a) est ménagée dans une région qui est située à peu près au milieu entre deux raccords de la sangle (16') à un longeron adjacent respectif (12 ; 12').

6. Structure de bâche selon l'une des revendications 1 à 5, **caractérisée en ce que**, dans la région de la fente (20a), lorsque la bâche (14) est ouverte, la sangle (16') est disposée à distance du logement (20) et donc de la bâche (14).

7. Structure de bâche selon l'une des revendications 1 à 6, **caractérisée en ce que** la sangle (16') est fixée dans la région de chaque longeron non soulevé (12), et que la sangle (16') précontraint seulement une région, située entre deux longerons non soulevés (12), dans le sens de l'ouverture.

8. Structure de bâche selon l'une des revendications 1 à 7, **caractérisée en ce que** la sangle (16') est fixée dans la région de chaque longeron soulevé (12') et de chaque longeron non soulevé (12), et que la sangle (16') précontraint la région, située entre le longeron soulevé adjacent (12') et le longeron non soulevé (12), dans le sens de l'ouverture.

9. Structure de bâche selon l'une des revendications 1 à 7, **caractérisée en ce que** la sangle (16') est fixée dans la région de chaque longeron soulevé (12'), et que la sangle (16') précontraint seulement une région, située entre deux longerons soulevés (12'), dans le sens de l'ouverture.

10. Structure de bâche selon la revendication 9, **caractérisée en ce que** la sangle (16') s'étend au-dessous de la bâche (14).

11. Structure de bâche selon l'une des revendications 1 à 10, **caractérisée en ce qu'**il est prévu, entre des longerons (12) adjacents, - au moins - des liaisons articulées (41, 42), incluant de préférence également un longeron de levage (12') reliant entre elles des liaisons opposées dans la région d'une articulation (43), et que les liaisons (41, 42) plient la bâche (14) lors de l'ouverture.

12. Structure de bâche selon la revendication 11, **caractérisée en ce que**, lorsque la bâche (14) est fermée, la sangle (16') entre des longerons (12) adjacents est à peu près égale à la longueur des liaisons (41, 42) entre deux longerons (12), tandis que, lorsque la bâche (14) est ouverte, la sangle (16') est plus courte que la longueur des liaisons (41, 42) entre deux longerons (12).

13. Structure de bâche selon l'une des revendications précédentes, **caractérisée en ce que** l'au moins un longeron (12) peut être déplacé par un coulisseau, monté à l'extrémité, afin d'ouvrir et de fermer la structure de bâche, et que l'au moins un longeron (12) est conçu comme un arceau d'un bâti de capote d'un toit ou comme une ranche d'une paroi latérale.

14. Structure de bâche selon l'une des revendications précédentes, **caractérisée en ce qu'**une boucle de la sangle (16 ; 18 ; 16') est placée autour d'au moins un longeron (12 ; 12'), et qu'un élément de fixation (30) est prévu entre le longeron (12 ; 12') et la bâche (14) comme élément de déviation de la sangle (16 ; 18 ; 16') et fixe par friction le longeron (12 ; 12') par rapport à la sangle (16 ; 18 ; 16').

15. Structure de bâche selon la revendication 14, **caractérisée en ce que** l'élément de fixation (30) est conçu comme une bague de fixation circulaire ou ovale, en particulier comme une bague en acier, que la largeur maximale de la bague de fixation (30) n'est pas inférieure à la largeur de la sangle (16 ; 16'), et que l'élément de fixation (30) a une circonférence ou un diamètre supérieur à celle, resp. celui, de l'au moins un longeron (12 ; 12').
